# FASCICULE DE BREVET EUROPEEN

(11) **EP 3 394 552 B1**
(45) Date de publication et mention de la délivrance du brevet: **20.11.2019**
(21) Numéro de dépôt: 16829276.1
(22) Date de dépôt: 22.12.2016
(51) Int. Cl.: F28F 3/02, F28F 3/12, F28F 13/14, H05K 7/20, H01M 10/617, F28D 21/00, H01M 10/6557, H01M 10/6555

(54) **DISPOSITIF DE MISE EN TEMPERATURE D'UN OBJET**
VORRICHTUNG ZUR EINSTELLUNG DER TEMPERATUR EINES OBJEKTS
DEVICE FOR SETTING THE TEMPERATURE OF AN OBJECT

(30) Priorité: 23.12.2015 FR 1563198
(43) Date de publication de la demande: 31.10.2018
(73) Titulaire: RENAULT s.a.s., 92100 Boulogne-Billancourt (FR)
(72) Inventeur: MARCHAL, Caroline, 75015 Paris (FR); RECOUVREUR, Philippe, 92120 Montrouge (FR)
(86) Numéro de dépôt international: PCT/FR2016/053632
(87) Numéro de publication internationale: WO 2017/109424

(56) Documents cités:
- WO-A1-2014/082349
- JP-A- 2003 188 321
- TW-A- 200 848 994
- US-A1- 2009 255 660

## Description

L'invention se rapporte à un dispositif de mise en température d'un objet.

Certains objets, comme par exemple une batterie électrique de véhicule, peuvent présenter lors de leur utilisation, des zones d'échauffement hétérogènes. Autrement dit, certaines zones de la batterie sont chauffées de façon plus importante que les autres. Lors d'une phase de refroidissement de ces zones, il convient d'utiliser un dispositif de refroidissement adapté, apte à refroidir de façon appropriée chacune de ces différentes zones.

Un dispositif de refroidissement d'une batterie a par exemple été décrit dans le document CN202352796. Un tel dispositif met en œuvre une plaque de refroidissement comportant un circuit d'un fluide caloporteur et des éléments aptes à créer des turbulences au niveau dudit fluide. Cette plaque est destinée à refroidir la batterie par contact. Un inconvénient de ce dispositif de refroidissement est qu'il fournit un froid homogène, qui n'est pas adapté au refroidissement d'un objet présentant différentes zones à des températures différentes.

Le document WO2014/082349A1 divulgue un radiateur de refroidissement par air comportant des ailettes espacées de deux manières différentes. Ce document décrit un dispositif de mise en température d'un objet suivant le préambule de la revendication 1. Un inconvénient majeur de ce type de dispositif de refroidissement à ailettes, c'est qu'il présente un encombrement excessif.

Un dispositif de mise en température selon l'invention, permet d'amener à une température uniformisée un objet présentant des zones portées à des températures différentes.

L'invention a pour objet un dispositif destiné à modifier la température d'un objet comportant au moins deux zones portées à des températures différentes, ledit dispositif comportant un fluide caloporteur et au moins une plaque traversée par ledit fluide et destinée à venir au contact dudit objet.

Selon l'invention la plaque comprend des moyens de circulation dudit fluide permettant de différencier au moins deux parties distinctes de ladite plaque ayant chacune leur propre capacité à faire varier la température d'une zone dudit objet, ladite plaque venant au contact de l'objet pour diminuer les différences de température entre les différentes zones dudit objet. Le terme « modifier la température » signifie, soit chauffer l'objet, soit le refroidir, en fonction des besoins par rapport audit objet. De cette manière, les deux parties distinctes de la plaque chauffent ou refroidissent simultanément les deux zones spécifiques de l'objet en venant directement à leur contact. La plaque est destinée à refroidir ou à chauffer un objet essentiellement par conduction thermique, en étant mise au contact dudit objet. Si l'objet est supposé posséder deux zones portées à des températures différentes, la plaque peut être configurée et apposée sur l'objet, de manière à faire évoluer les températures desdites zones vers une même température et ainsi obtenir une température résultante homogène dudit objet sur tout son volume. Le fluide caloporteur peut être, soit liquide, soit gazeux. Avantageusement, un tel fluide peut être constitué par de l'eau ou par de l'air. Les moyens de circulation sont préférentiellement passifs, et ont pour vocation à modifier les caractéristiques de la circulation du fluide dans la plaque. Le fait que les moyens soient passifs signifie qu'ils ne nécessitent aucune source énergétique propre pour fonctionner et coopérer avec le fluide. Le terme « diminuer les différences de température entre les différentes zones de l'objet» inclut la configuration « supprimer les différences de température entre les différentes zones de l'objet ».

Selon l'invention, le fluide est caloporteur, la plaque comprenant deux parties ayant chacune leur propre capacité à échanger thermiquement avec une zone particulière de l'objet. Un tel dispositif est particulièrement adapté au refroidissement d'une batterie électrique de véhicule présentant deux zones d'échauffement portées à des températures différentes ou deux zones à conditionner différemment.

Selon l'invention, la plaque comprend une entrée de fluide, une première et une deuxième sortie dudit fluide, le débit du fluide de refroidissement dans le circuit entre l'entrée et la première sortie étant supérieur au débit dudit fluide dans le circuit entre la première sortie et la deuxième sortie. La réalisation des deux parties ayant chacune leur propre capacité de refroidissement, s'effectue par l'intermédiaire du débit du fluide de refroidissement circulant dans lesdites parties. La partie ayant la plus grosse capacité de refroidissement est traversée par le fluide avec un fort débit, l'autre partie étant traversée par le fluide avec un plus faible débit. Pour cette configuration, le premier circuit de fluide compris entre l'entrée et la première sortie, et le deuxième circuit de fluide compris entre la première sortie et la deuxième sortie peuvent être montés, soit en série l'un à la suite de l'autre, soit en parallèle et constituer ainsi deux circuits indépendants ayant pour seul point commun l'entrée de fluide. Lorsqu'ils sont montés en série, la première sortie peut être avantageusement située entre l'entrée et la deuxième sortie.

Préférentiellement, le circuit entre l'entrée et la première sortie présente une section transversale supérieure à celle du circuit entre l'entrée et la deuxième sortie. Les moyens de circulation sont réalisés à travers la section transversale du circuit de circulation de fluide dans la plaque. La partie de la plaque ayant la plus forte capacité de refroidissement est traversée par le circuit ayant la section transversale la plus importante, et la partie de la plaque ayant la plus faible capacité de refroidissement est traversée par le circuit ayant la section transversale la plus faible.

De façon avantageuse, le circuit est matérialisé par un conduit cylindrique, le diamètre du conduit entre l'entrée et la première sortie étant supérieur au diamètre du conduit entre l'entrée et la deuxième sortie. Il s'agit d'un mode de réalisation facile et rapide à réaliser.

Avantageusement, le circuit est unique et continu entre l'entrée et la deuxième sortie, la première sortie étant située entre ladite entrée et ladite deuxième sortie.

Selon un autre mode de réalisation préféré d'un dispositif selon l'invention, le circuit comprend une entrée, une première zone, une deuxième zone et une sortie de fluide, ladite première zone étant en communication avec ladite entrée et ladite deuxième zone et ladite deuxième zone étant en communication avec ladite sortie, l'une desdites deux zones comprenant des éléments de turbulence aptes à créer la transition de l'écoulement en régime turbulent. Les moyens de circulation du fluide permettant de faire ressortir au moins deux parties ayant leurs propres capacités de refroidissement sont représentés par les éléments de turbulences. Les éléments de turbulences peuvent préférentiellement être représentés par des protubérances profilées et organisées au sein de la plaque selon un ordonnancement particulier. De façon avantageuse, la première zone comprend les éléments de turbulence.

Préférentiellement, la plaque est réalisée en aluminium. Puisque la plaque a pour but de modifier la température d'un objet par contact, et donc essentiellement par conduction thermique, elle doit être dotée d'une bonne capacité thermique et demeurer d'un poids modéré, afin de ne pas surcharger inutilement l'objet et le mettre sous contrainte.

De façon avantageuse, la plaque est vissée à l'objet.

L'invention a pour autre objet une plaque pour la réalisation d'un dispositif conforme à l'invention.

L'invention a pour autre objet un ensemble constitué par un pack de batterie et un dispositif de refroidissement conforme à l'invention, ledit pack comprenant un premier module d'accumulateurs et un deuxième module d'accumulateurs, ledit premier module générant plus de chaleur que ledit deuxième module.

La principale caractéristique d'un ensemble selon l'invention est que la plaque est en contact avec les deux modules de sorte que la partie de ladite plaque ayant la plus forte capacité de refroidissement se retrouve au contact du premier module et la partie ayant la plus faible capacité de refroidissement se retrouve au contact du deuxième module.

Un dispositif de refroidissement selon l'invention présente l'avantage d'être modulaire en mettant en œuvre une plaque de refroidissement apte à posséder une multiplicité de parties ayant chacune sa propre capacité de refroidissement. Un tel dispositif peut donc s'adapter à une grande variété d'objets, possédant une pluralité de zones portées à des températures différentes. Il a de plus l'avantage d'être d'un encombrement constant par rapport aux dispositifs de refroidissement existants, et mettant en œuvre une plaque de refroidissement ayant une température uniforme. Ils présentent enfin l'avantage d'être facile et rapide à fabriquer.

On donne ci-après, une description détaillée de deux modes de réalisation préférés d'un dispositif de refroidissement selon l'invention, en se référant aux figures suivantes :
- La figure 1 est une vue schématique de côté d'un exemple d'un pack de batterie montrant deux zones d'échauffement distinctes,
- La figure 2 est une vue schématique d'un premier mode de réalisation préféré d'un dispositif de refroidissement selon l'invention,
- La figure 3 est une vue schématique d'un deuxième mode de réalisation préféré d'un dispositif de refroidissement selon l'invention.

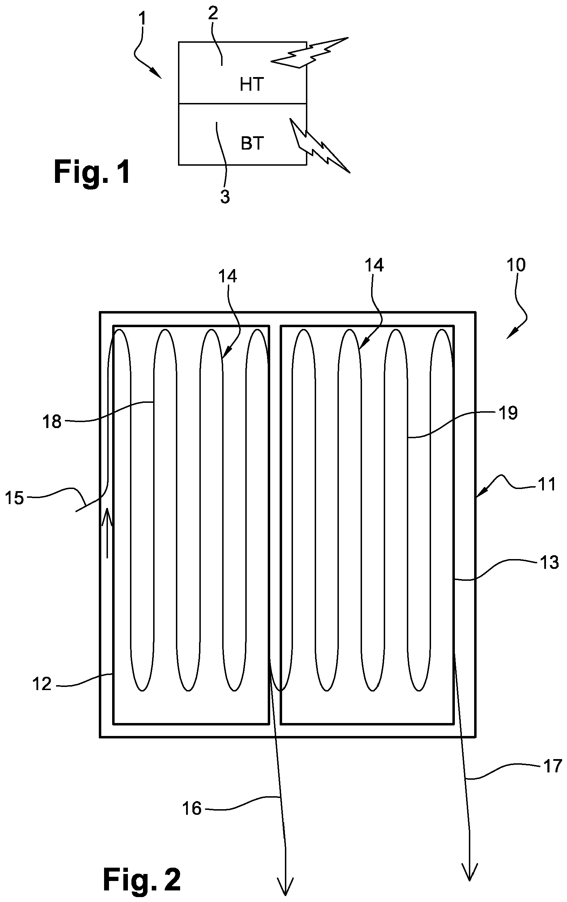

En se référant à la figure 1, certains packs 1 de batterie électriques peuvent présenter deux portions 2, 3 constituant deux zones 2, 3 d'échauffement distinctes, l'une 2 correspondant à une zone de haute tension (HT) et l'autre 3 à une zone de basse tension (BT). Or, pour des problèmes de durabilité et de performance, il s'avère nécessaire de maintenir ces packs 1 de batterie à une température modérée, pouvant par exemple être comprise entre 20°C et 30°C. Il convient donc d'utiliser un dispositif de refroidissement 10, 50 qui va tenir compte de la présence de ces deux zones 2, 3 d'échauffement distinctes, de manière à obtenir au final un pack 1 de batterie ayant une température réduite et homogène sur tout son volume. Il est supposé que le pack 1 de batterie n'est composé que de ces deux portions 2, 3.

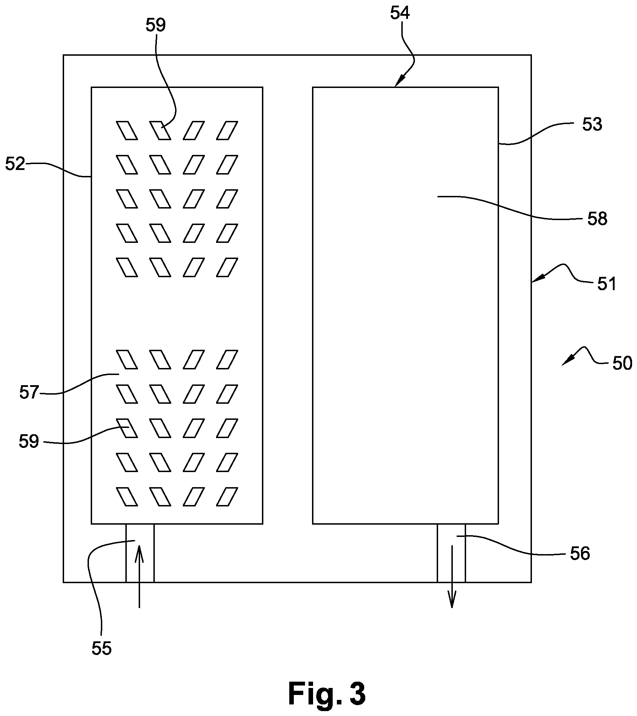

En se référant aux figures 2 et 3, un tel dispositif de refroidissement 10,50 met en œuvre une plaque 11, 51 de refroidissement et une source d'un fluide de refroidissement destiné à alimenter ladite plaque 11, 51. Cette plaque 11, 51 est destinée à venir au contact du pack 1 de batterie pour refroidir, essentiellement par conduction thermique, les différentes zones 2, 3 d'échauffement dudit pack 1. Les dimensions en longueur et en largeur de ladite plaque 11, 51 sont sensiblement analogues à celles du pack 1 de batterie à refroidir. Par contre, l'épaisseur de ladite plaque 11, 51 doit être minimisée, par exemple de un à quelques centimètres, c'est-à-dire une épaisseur tout juste suffisante pour enfermer un circuit de circulation de fluide. De cette manière, ladite plaque 11, 51 est de faible encombrement et peut se glisser facilement dans un espace restreint au contact du pack 1.

La principale caractéristique de la plaque de refroidissement 11, 51 est qu'elle possède deux parties distinctes 12, 13, 52, 53 ayant chacune sa propre capacité de refroidissement, chacune desdites parties 12, 13, 52, 53 étant destinée à refroidir l'une desdites deux zones 2, 3 du pack 1 de batterie.

En se référant à la figure 2, un premier mode de réalisation préféré d'un dispositif de refroidissement 10 selon l'invention, comprend une plaque 11 traversée par un circuit de circulation 14 du fluide de refroidissement, comprenant une entrée 15, une première sortie 16 et une deuxième sortie 17. Ledit circuit 14 comprend un premier tronçon 18 reliant l'entrée 15 à la première sortie 16 et un deuxième tronçon 19 reliant ladite première sortie 16 à ladite deuxième sortie 17. Le premier tronçon 18 est réalisé avec un tube cylindrique ayant un profil sinusoïdal. Le deuxième tronçon 19 est réalisé avec un tube cylindrique ayant un profil sinusoïdal, ledit tube ayant un diamètre réduit, inférieur à celui du tube formant le premier tronçon 18. Le premier 18 et le deuxième 19 tronçons sont en continuité l'un de l'autre et en communication l'un avec l'autre. La partie 12 de la plaque 11 comprenant le premier tronçon 18 du circuit 14 de fluide, aura une capacité de refroidissement plus élevée que celle de la partie 13 de ladite plaque 11 comprenant le deuxième tronçon 19 dudit circuit 14 de fluide, dont le tube a un diamètre plus faible que celui du tube définissant le premier tronçon 18.

Le fluide de refroidissement passe d'abord par l'entrée 15, puis alimente le premier tronçon 18 du circuit 14 ayant un diamètre élevé. Une fois que le fluide a circulé dans le tube du premier tronçon 18, une fraction dudit fluide poursuit sa progression dans le tube de plus faible diamètre constituant le deuxième tronçon 19, tandis qu'une autre fraction dudit fluide sort par la première sortie 16. Le fluide est évacué du deuxième tronçon 19 par la deuxième sortie 17.

Afin de refroidir efficacement le pack 1 de batterie, la plaque 11 est placée contre ledit pack 1, de sorte que la partie 12 comprenant le premier tronçon 18 soit plaquée contre la zone 2 la plus chaude du pack 1 et la partie 13 comprenant le deuxième tronçon 19 soit plaquée contre la zone 3 la moins chaude dudit pack 1.

En se référant à la figure 3, un deuxième mode de réalisation préféré d'un dispositif de refroidissement 50 selon l'invention, comprend une plaque 51 traversée par un circuit de circulation 54 du fluide de refroidissement, comprenant une entrée 55, une première zone 57, une deuxième zone 58 et une sortie 56. La première zone 57 est en communication avec l'entrée 55 et la deuxième zone 58, et ladite deuxième zone 58 est en communication avec la sortie 56. Autrement dit, l'entrée 55 débouche dans la première zone 57, qui est elle-même en communication avec la deuxième zone 58, ladite deuxième zone 58 communiquant avec la sortie 56. La première zone 57 est étendue et de forme rectangulaire. Ladite zone 57 possède plusieurs éléments de turbulence 59 disposés en rangées parallèles régulières. Chaque élément de turbulence 59 est constitué par une protubérance profilée, apte à créer des tourbillons dans le fluide afin de passer de faire passer l'écoulement du fluide du régime laminaire au régime turbulent. La deuxième zone 58 est étendue et de forme rectangulaire. La deuxième zone 58 a les mêmes dimensions que la première zone 57, lesdites deux zones 57, 58 étant disposées parallèlement l'une à l'autre. Autrement dit, les deux zones 57, 58 sont disposées de telle sorte que leurs grands cotés soient parallèles. La présence des éléments de turbulence 59 dans la première zone 57 va faire que le fluide va stagner plus longtemps dans la première zone conférant à ladite première zone une capacité de refroidissement plus élevée que celle de la deuxième zone 58 dépourvue de ces éléments de turbulence, d'autant plus que dans le cas d'un refroidissement la température d'entrée de la première zone 57 est inférieure à celle en entrée de la deuxième zone 58 puisque le fluide a déjà été réchauffé par les échanges thermiques avec la zone 2 la plus chaude du pack batterie.

Afin de refroidir efficacement le pack 1 de batterie, la plaque 51 est placée contre ledit pack 1, de sorte que la partie 52 comprenant la première zone 57 dotée des éléments de turbulence 59 soit plaquée contre la zone 2 la plus chaude du pack 1 et la partie 53 comprenant la deuxième zone 58 soit plaquée contre la zone 3 la moins chaude dudit pack 1.

Il faut souligner que le circuit 14, 54 du fluide de refroidissement utilisé pour les deux modes de réalisation préférés 10, 50 précédemment décrits, est un circuit fermé possédant une source de fluide et des moyens aptes à déplacer le fluide dans ledit circuit 14, 54.

Dans les figures seules deux zones thermiques sont représentées mais il pourrait y en avoir plus.

Ce système multizone peut aussi servir pour le réchauffage de batterie.

Ce système multizone peut aussi servir dans le cas de technologies batteries distinctes mises dans un même pack mais nécessitant des régulations thermiques différentes.

## Revendications

1. Dispositif (10, 50) destiné à modifier la température d'un objet (1) comportant au moins deux zones (2, 3) portées à des températures différentes, ledit dispositif (10, 50) comportant un fluide caloporteur et au moins une plaque (11, 51) traversée par ledit fluide et destinée à venir au contact dudit objet (1), la plaque (11, 51) comprenant des moyens de circulation dudit fluide permettant de différencier au moins deux parties distinctes (12, 13, 52, 53) de ladite plaque (11, 51) ayant chacune leur propre capacité à échanger thermiquement et à faire varier la température de l'une des zones (2, 3) dudit objet (1), et en ce que ladite plaque (11, 51) vient au contact de l'objet (1) pour diminuer les différences de température entre les différentes zones (2, 3) dudit objet (1), le dispositif étant **caractérisé en ce que** la plaque (11) comprend une entrée (15) de fluide, une première (16) et une deuxième sortie (17) dudit fluide, et **en ce que** le débit du fluide de refroidissement dans le circuit (14) entre l'entrée (15) et la première sortie (16) est supérieur au débit dudit fluide dans le circuit (14) entre la première sortie (16) et la deuxième sortie (17).

2. Dispositif selon la revendication 1, **caractérisé en ce que** le circuit (14) entre l'entrée (15) et la première sortie (16) présente une section transversale supérieure à celle du circuit (14) entre l'entrée (15) et la deuxième sortie (17).

3. Dispositif selon la revendication 2, **caractérisé en ce que** le circuit (14) est matérialisé par un conduit cylindrique (18, 19), et **en ce que** le diamètre du conduit (18) entre l'entrée (15) et la première sortie (16) est supérieur au diamètre du conduit (19) entre l'entrée (15) et la deuxième sortie (16).

4. Dispositif selon l'une quelconque des revendications 1 à 3, **caractérisé en ce que** le circuit (14, 18, 19) est unique et continu entre l'entrée (15) et la deuxième sortie (17), et **en ce que** la première sortie (16) est située entre ladite entrée (15) et ladite deuxième sortie (17).

5. Dispositif selon la revendication 1, **caractérisé en ce que** le circuit (54) comprend une entrée (55), une première zone (57), une deuxième zone (58) et une sortie (56) de fluide, ladite première zone (57) étant en communication avec ladite entrée (55) et ladite deuxième zone (58), et ladite deuxième zone (58) étant en communication avec ladite sortie (56), et **en ce que** l'une desdites deux zones (57, 58) comprenant des éléments de turbulence (59) aptes à créer la transition de l'écoulement en régime turbulent.

6. Dispositif selon l'une quelconque des revendications 1 à 5, **caractérisé en ce que** la plaque (11, 51) est réalisée en aluminium.

7. Plaque (11, 51) pour la réalisation d'un dispositif (10, 50) conforme à l'une quelconque des revendications 1 à 6.

8. Ensemble constitué par un pack (1) de batterie et un dispositif de refroidissement (10, 50) conforme à l'une quelconque des revendications 1 à 6, ledit pack (1) comprenant un premier module (2) d'accumulateurs et un deuxième module (3) d'accumulateurs, ledit premier module (2) générant plus de chaleur que ledit deuxième module (3), **caractérisé en ce que** la plaque (11, 51) est en contact avec les deux modules (2, 3) de sorte que la partie (12, 52) de ladite plaque (11, 51) ayant la plus forte capacité de refroidissement se retrouve au contact du premier module (2) et la partie (13, 53) ayant la plus faible capacité de refroidissement se retrouve au contact du deuxième module (3).

## Patentansprüche

1. Vorrichtung (10, 50), die dazu bestimmt ist, die Temperatur eines Objekts (1) zu ändern, das mindestens zwei Zonen (2, 3) umfasst, die auf unterschiedliche Temperaturen gebracht werden, wobei die Vorrichtung (10, 50) ein Wärmeträgerfluid und mindestens eine Platte (11, 51) umfasst, durch die das Fluid hindurchtritt und die dazu bestimmt ist, mit dem Objekt (1) in Kontakt zu kommen, wobei die Platte (11, 51) Mittel zum Zirkulieren des Fluids umfasst, um mindestens zwei verschiedene Teile (12, 13, 52, 53) der Platte (11, 51) zu unterscheiden, die jeweils ihre eigene Fähigkeit zum Wärmeaustausch und zum Variieren der Temperatur einer der Zonen (2, 3) des Objekts (1) aufweisen, und dass die Platte (11, 51) in Kontakt mit dem Objekt (1) kommt, um die Temperaturunterschiede zwischen den verschiedenen Zonen (2, 3) des Objekts (1) zu verringern, wobei die Vorrichtung **dadurch gekennzeichnet ist, dass** die Platte (11) einen Fluideinlass (15), einen ersten Fluidauslass (16) und einen zweiten Fluidauslass (17) umfasst, und dass die Durchflussrate des Kühlfluids im Kreislauf (14) zwischen dem Einlass (15) und dem ersten Auslass (16) größer ist als die Durchflussrate des Fluids im Kreislauf (14) zwischen dem ersten Auslass (16) und dem zweiten Auslass (17).

2. Vorrichtung nach Anspruch 1, **dadurch gekennzeichnet, dass** der Kreislauf (14) zwischen dem Einlass (15) und dem ersten Auslass (16) einen größeren Querschnitt aufweist als der Kreislauf (14) zwischen dem Einlass (15) und dem zweiten Auslass (17).

3. Vorrichtung nach Anspruch 2, **dadurch gekennzeichnet, dass** der Kreislauf (14) durch eine zylindrische Leitung (18, 19) materialisiert ist, und dass der Durchmesser der Leitung (18) zwischen dem Einlass (15) und dem ersten Auslass (16) größer ist als der Durchmesser der Leitung (19) zwischen dem Einlass (15) und dem zweiten Auslass (16).

4. Vorrichtung nach einem der Ansprüche 1 bis 3, **dadurch gekennzeichnet, dass** der Kreislauf (14, 18, 19) einmalig und zwischen dem Einlass (15) und dem zweiten Auslass (17) durchgehend ist, und dass der erste Auslass (16) zwischen dem Einlass (15) und dem zweiten Auslass (17) angeordnet ist.

5. Vorrichtung nach Anspruch 1, **dadurch gekennzeichnet, dass** der Kreislauf (54) einen Einlass (55), eine erste Zone (57), eine zweite Zone (58) und einen Auslass (56) von Fluid umfasst, wobei die erste Zone (57) mit dem Einlass (55) und der zweiten Zone (58) in Verbindung steht und die zweite Zone (58) mit dem Auslass (56) in Verbindung steht, und dass eine der beiden Zonen (57, 58) Wirbelelemente (59) umfasst, die in der Lage sind, den Übergang des Durchflusses in verwirbelter Form zu erzeugen.

6. Vorrichtung nach einem der Ansprüche 1 bis 5, **dadurch gekennzeichnet, dass** die Platte (11, 51) aus Aluminium besteht.

7. Platte (11, 51) zur Herstellung einer Vorrichtung (10, 50) nach einem der Ansprüche 1 bis 6.

8. Anordnung, bestehend aus einem Batteriepack (1) und einer Kühlvorrichtung (10, 50) nach einem der Ansprüche 1 bis 6, wobei der Pack (1) ein erstes Batteriemodul (2) und ein zweites Batteriemodul (3) umfasst, wobei das erste Modul (2) mehr Wärme erzeugt als das zweite Modul (3), **dadurch gekennzeichnet, dass** die Platte (11, 51) mit den beiden Modulen (2, 3) in Kontakt steht, so dass der Teil (12, 52) der Platte (11, 51) mit der höchsten Kühlleistung mit dem ersten Modul (2) in Kontakt steht und der Teil (13, 53) mit der niedrigsten Kühlleistung mit dem zweiten Modul (3) in Kontakt steht.

## Claims

1. Device (10, 50) intended to modify the temperature of an object (1) comprising at least two zones (2, 3) brought to different temperatures, said device (10, 50) comprising a heat transfer fluid and at least one plate (11, 51) passed through by said fluid and intended to come into contact with said object (1), the plate (11, 51) comprising means for circulating said fluid making it possible to differentiate at least two distinct parts (12, 13, 52, 53) of said plate (11, 51) each having their own capacity to exchange heat and to vary the temperature of one of the zones (2, 3) of said object (1), and in that said plate (11, 51) comes into contact with the object (1) to reduce the temperature differences between the different zones (2, 3) of said object (1), the device being **characterized in that** the plate (11) comprises a fluid inlet (15), a first outlet (16) and a second outlet (17) for said fluid, and **in that** the flow rate of the coolant in the circuit (14) between the inlet (15) and the first outlet (16) is greater than the flow rate of said fluid in the circuit (14) between the first outlet (16) and the second outlet (17) .

2. Device according to Claim 1, **characterized in that** the circuit (14) between the inlet (15) and the first outlet (16) has a cross section greater than that of the circuit (14) between the inlet (15) and the second outlet (17).

3. Device according to Claim 2, **characterized in that** the circuit (14) is delimited by a cylindrical duct (18, 19), and **in that** the diameter of the duct (18) between the inlet (15) and the first outlet (16) is greater than the diameter of the duct (19) between the inlet (15) and the second outlet (16).

4. Device according to any one of Claims 1 to 3, **characterized in that** the circuit (14, 18, 19) is singular and continuous between the inlet (15) and the second outlet (17), and **in that** the first outlet (16) is situated between said inlet (15) and said second outlet (17).

5. Device according to Claim 1, **characterized in that** the circuit (54) comprises an inlet (55), a first zone (57), a second zone (58) and a fluid outlet (56), said first zone (57) being connected with said inlet (55) and said second zone (58), and said second zone (58) being connected with said outlet (56), and **in that** one of said two zones (57, 58) comprises turbulence elements (59) capable of creating the transition of the flow to turbulent regime.

6. Device according to any one of Claims 1 to 5, **characterized in that** the plate (11, 51) is made of aluminium.

7. Plate (11, 51) for producing a device (10, 50) according to any one of Claims 1 to 6.

8. Assembly composed of a battery pack (1) and a cooling device (10, 50) according to any one of Claims 1 to 6, said pack (1) comprising a first module (2) of cells and a second module (3) of cells, said first module (2) generating more heat than said second module (3), **characterized in that** the plate (11, 51) is in contact with the two modules (2, 3) so that the part (12, 52) of said plate (11, 51) having the greatest cooling capacity is in contact with the first module (2) and the part (13, 53) having the least cooling capacity is in contact with the second module (3).
